# EUROPEAN PATENT APPLICATION

(11) **EP 4 610 196 A1**
(43) Date of publication of application: **03.09.2025**
(21) Application number: 23882728.1
(22) Date of filing: 26.10.2023
(51) Int. Cl.: B65G 1/137, G06Q 10/08

(54) **ARTICLE ORDER PROCESSING METHOD, ARTICLE ORDER PROCESSING PROGRAM, ARTICLE ORDER PROCESSING SYSTEM, ARTICLE SORTING SYSTEM, AND COMPUTER-READABLE MEDIUM**

(30) Priority: 26.10.2022 JP 2022171591
(71) Applicant: Kabushiki Kaisha Toshiba, Tokyo 105-0023 (JP)
(72) Inventor: OTSURU, Yoshihide, Kawasaki-shi, Kanagawa 212-0013 (JP); SHIBATA, Masamitsu, Kawasaki-shi, Kanagawa 210-0007 (JP); NAKAMATA, Hirokazu, Kawasaki-shi, Kanagawa 210-0007 (JP); MATSUMURA, Atsushi, Kawasaki-shi, Kanagawa 212-0013 (JP); SUGIYAMA, Masaaki, Kawasaki-shi, Kanagawa 212-0013 (JP); TAKIGUCHI, Takeru, Kawasaki-shi, Kanagawa 212-0013 (JP); SEKIGUCHI, Kana, Kawasaki-shi, Kanagawa 212-0013 (JP); EIMOTO, Yusan, Kawasaki-shi, Kanagawa 212-0013 (JP)
(74) Representative: HKW Intellectual Property PartG mbB
(86) International application number: PCT/JP2023/038744
(87) International publication number: WO 2024/090526

(57) **Abstract**

To provide an article order processing method to improve efficiency of article processing by selecting different picking methods.

An article order processing method according to an embodiment includes: acquiring an article order designating one or more articles; selecting a picking method for each article order from a plurality of different picking methods based on a plurality of the article orders acquired; and outputting a predetermined article order to an article processing device configured to implement a picking method selected for the predetermined article order.

## Description

### FIELD

Embodiments described herein relate to an article order processing method, an article order processing program, an article order processing system, an article sorting system, and a computer-readable storage medium.

### BACKGROUND

In recent years, with expansion of demand for mail-order sales and the like, the amount of articles handled at a physical distribution delivery base has increased, and a workload on a person in charge has increased. The work of the person in charge includes work of picking up an article designated by an article order from a plurality of kinds of articles stored on a shelf in a warehouse.

From the viewpoint of reducing the workload and improving efficiency of processing, various proposals have been made for automated warehouses in which some of the work is automated. For example, in an automated warehouse, an autonomous case-handling robot (ACR) takes a case out of a shelf and transports the case to a target area, an automated guided vehicle (AGV) transports the shelf itself to a target area, and a picking robot picks a predetermined article from the case. Reduction of load and improvement of efficiency are therefore pursued.

### CITATION LIST

### PATENT LITERATURE

Jpn. Pat. Appln. KOKAI Publication No. 2022-138867

### SUMMARY

### TECHNICAL PROBLEM

In relation to the picking of articles mentioned above, picking methods include a single picking method and a total picking method. The single picking method is suitable for a scenario in which various types of articles are handled, and it picks articles based on a single article order and sets up a combination of articles to be packed one by one. On the other hand, the total picking method is suitable for a scenario in which a small number of types of articles are handled, and it continuously picks the same articles or the same type of articles based on a plurality of article orders and collectively sets up a group of combinations of articles to be packed.

An automated warehouse system is a system in which either the single picking method or the total picking method is adopted according to the situation of the warehouse or the like. Meanwhile, there is a demand for further improving the efficiency of article processing by utilizing the characteristics of both the single picking method and the total picking method.

An object of the present disclosure is to provide an article order processing method, an article order processing program, an article order processing system, an article sorting system, and a computer-readable storage medium which increase an efficiency of article processing by selecting different picking methods.

### SOLUTION TO PROBLEM

An article order processing method according to an embodiment includes: acquiring an article order designating one or more articles; selecting a picking method for each article order from a plurality of different picking methods based on a plurality of article orders acquired; and outputting a predetermined article order to an article processing device configured to implement the picking method selected for the predetermined article order.

### BRIEF DESCRIPTION OF THE DRAWINGS

FIG. 1 is a conceptual diagram illustrating an example of a warehouse system according to an embodiment.
FIG. 2 is a diagram illustrating an example of a layout of an article processing area according to the embodiment.
FIG. 3 is a sequence diagram illustrating an example of a selection process of a picking method according to the embodiment.
FIG. 4 is a sequence diagram illustrating an example of a total picking process according to the embodiment.
FIG. 5 is a sequence diagram illustrating an example of a single picking process according to the embodiment.

### DETAILED DESCRIPTION

### [Configuration]

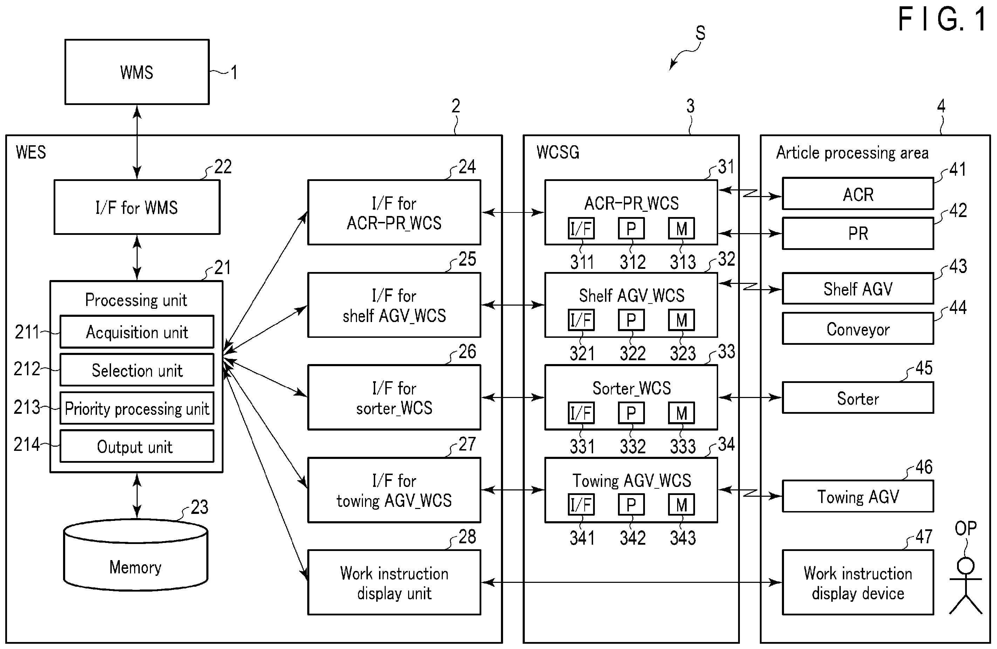

FIG. 1 is a conceptual diagram illustrating an example of a warehouse system according to an embodiment.

As shown in FIG. 1, a warehouse system S is an example of an article sorting system, and manages the entire warehouse. The warehouse system S includes a warehouse management system (WMS) 1, a warehouse execution system (WES) 2, a warehouse control system group (WCSG) 3, and an article processing area 4.

The WMS 1 may be configured by one or a plurality of general-purpose computers, that is, an input/output interface, a processor, a memory, and the like. The WMS 1 receives an article order from a host server and transmits it to the WES 2. For example, the WMS 1 receives an article order group including a plurality of article orders from the host server and transmits the article order group to the WES 2.

The article order is an order for designating one or more articles, and includes article information, ordering information, and delivery information. The article information includes the number of articles, article identification information (article ID), an article name, and the like. The ordering information includes an ordering date and time, an orderer, and the like. The delivery information includes a delivery destination, a delivery date and time, a recipient, and the like.

The WES 2 is an example of an article order processing system, and may be configured by one or a plurality of general-purpose computers, that is, an input/output interface, a processor, a memory, and the like. The WES 2 is an example of an article order processing system, and is an entity to perform an article order processing method and an article order processing program.

The WES 2 receives an article order group including a plurality of article orders from the WMS 1, selects a picking method for each article order from a plurality of different picking methods based on the plurality of article orders included in the article order group, and outputs a predetermined article order to an article processing device configured to execute the picking method selected for the predetermined article order. For example, outputting a predetermined article order to an article processing device configured to implement the picking method is outputting the predetermined article order to a control system of the article processing device.

For example, the WES 2 selects a single picking method of picking articles in a unit of one article order or a total picking method of picking articles in a unit of two or more article orders based on a plurality of article orders, outputs a first predetermined number of article orders as a selection basis (selection factor) of the single picking method to a first article processing device (for example, a control system of the first article processing device) configured to perform the single picking method, and outputs a second predetermined number of article orders as a selection basis (selection factor) of the total picking method to a second article processing device (a control system of the second article processing device) configured to perform the total picking method. The total picking method is a method of picking articles for each article type in units of two or more article orders.

The WES 2 includes a processing unit 21, an interface (I/F) 22 for WMS, and a memory 23. The processing unit 21 is configured by one or a plurality of processors. The processor is a central processing unit (CPU), a micro processing unit (MPU), a digital signal processor (DSP), or the like, and corresponds to a central portion of a computer that performs an operation or the like necessary for various kinds of processing. The processor realizes various functions by executing a program or programs stored in the memory 23.

The processing unit 21 functions as an order processor and executes article order distribution and inter-device cooperation control. For example, the processing unit 21 includes an acquisition unit 211, a selection unit 212, a priority processing unit 213, and an output unit 214.

The acquisition unit 211 acquires a plurality of article orders from the memory 23.

The selection unit 212 selects a picking method for each article order from a plurality of different picking methods based on the plurality of article orders acquired. For example, the selection unit 212 selects the single picking method or the total picking method based on the plurality of article orders acquired.

The priority processing unit 213 executes priority processing based on article orders. For example, the priority processing unit 213 may execute the priority processing based on criteria differing between the article order for which the single picking method is selected and the article order for which the total picking method is selected.

For each article order for the total picking method (for two or more article orders output to the article processing device configured to implement the total picking method), the priority processing unit 213 determines the priority of each article order according to the number of article orders established by picking of a predetermined article or a predetermined type of article. In the case where the number of article orders established by picking an article A is the maximum, the priority processing unit 213 determines the priority of the article orders designating the article A to be the highest rank.

For example, the priority processing unit 213 may determine the priority of the article order established by picking one type of article to be the highest rank, and the priority of the article order established by picking two types of articles to be the second highest rank.

The priority processing unit 213 groups, according to the priorities, the trays to which articles are sorted by a sorter 451. Thus, the sorting process to each tray is completed in units of grouping. That is, the sorting process to each tray corresponding to the article order of the highest priority rank is completed, and then the sorting process to each tray corresponding to the article order of the second highest priority rank is completed.

For each article order for the single picking method (for two or more article orders output to the article processing device configured to implement the single picking method), the priority processing unit 213 determines the priority of the article order according to a date and time requested by the article order. For example, the priority processing unit 213 determines the priority of the article order according to the delivery date and time included in the article order. The priority processing unit 213 determines the priority of the article order with the earliest delivery date and time to be the highest rank, and determines the priority of the article order with the second earliest delivery date and time to be the second highest rank. Note that the shipping date and time determined according to the delivery date and time may be used.

The priority processing unit 213 determines the priority of the article order according to a delivery destination requested by the article order. For example, the priority processing unit 213 determines the priority of the article order of the first delivery destination included in the article order to be the first priority, and determines the priority of the second delivery destination included in the article order to be the second priority.

The priority processing unit 213 groups, according to the priorities, the trays to which articles are sorted by a sorter 452. Thus, the sorting process to each tray is completed in order in units of grouping. That is, the sorting process to each tray corresponding to the article order of the highest rank or the priority of the first rank is completed in order, and then the sorting process to each tray corresponding to the article order of the second highest rank or the priority of the second rank is completed in order.

The priority determination method (that is, the priority determination method based on the delivery date and time or the delivery destination) applied to each article order for the single picking method may be applied to each article order for the total picking method.

The output unit 214 outputs each article order to the picking processing unit of the picking method selected for the article order via the respective interface.

The I/F 22 for WMS functions as a first interface and receives an article order transmitted from the WMS 1.

The memory 23 stores an operation program of the processing unit 21. The memory 23 stores an article order group including a plurality of article orders received via the I/F 22 for WMS. The memory 23 also stores the state of the device and the like.

The WES 2 includes an I/F 24 for an autonomous case-handling robot (ACR)-picking robot (PR)_WCS, an I/F 25 for a shelf automated guided vehicle (AGV)_WCS, an I/F 26 for a sorter_WCS, an I/F 27 for a towing AGV_WCS, and a work instruction display unit 28.

The WCSG 3 is an example of an article control system, and includes a plurality of warehouse control systems (WCS: warehouse control system group) corresponding to the plurality of article processing devices, respectively. For example, the WCSG 3 comprises an autonomous case-handling robot (ACR)-PR_WCS 31, a shelf AGV_WCS 32, a sorter_WCS 33, and a towing AGV_WCS 34.

The ACR-PR_WCS 31 may be configured by one or a plurality of general-purpose computers, and includes, for example, an input/output interface 311, a processor (device control processor) 312, and a memory 313.

The shelf AGV_WCS 32 may be configured by one or more general-purpose computers, and includes, for example, an input/output interface 321, a processor (device control processor) 322, and a memory 323.

The sorter _WCS 33 may be configured by one or more general-purpose computers, and includes, for example, an input/output interface 331, a processor (device control processor) 332, and a memory 333.

The towing AGV_WCS 34 may be configured by one or more general-purpose computers, and includes, for example, an input/output interface 341, a processor (device control processor) 342, and a memory 343.

The article processing area 4 includes a plurality of article processing devices configured to implement picking methods selected for article orders. The article processing system is constituted by the plurality of article processing devices. For example, the article processing area 4 includes an ACR 41, a PR 42, a conveyor 44 (441), a sorter 45 (451), and a towing AGV 46 as the plurality of article processing devices configured to implement the total picking method. The article processing area 4 also includes a shelf AGV 43, a conveyor 44 (442), a sorter 45 (452), and a work instruction display device 47 as the plurality of article processing devices configured to implement the single picking method. The plurality of article processing devices configured to implement the single picking method may include the PR 42.

The I/F 24 for ACR-PR_WCS functions as a second interface, and outputs a control signal for the ACR 41 and the PR 42 from the processing unit 21 to the ACR-PR_WCS 31, and the ACR-PR_WCS 31 controls the ACR 41 and the PR 42 based on the control signal for the ACR 41 and the PR 42.

The I/F 25 for the shelf AGV_WCS functions as a second interface, and outputs a control signal for the shelf AGV 43 from the processing unit 21 to the shelf AGV_WCS 32, and the shelf AGV_WCS 32 controls the shelf AGV 43 based on the control signal for the shelf AGV 43.

The I/F 26 for sorter_WCS functions as a second interface and outputs a control signal for the sorter 45 from the processing unit 21 to the sorter_WCS 33, and the sorter_WCS 33 controls the sorter 45 based on the control signal for the sorter 45.

The I/F 27 for the towing AGV_WCS functions as a second interface, and outputs a control signal for the towing AGV 46 from the processing unit 21 to the towing AGV_WCS 34, and the towing AGV_WCS 34 controls the towing AGV 46 based on the control signal for the towing AGV 46.

The work instruction display unit 28 outputs display information of the work instruction from the processing unit 21 to the work instruction display device 47, and the work instruction display device 47 displays the display information of the work instruction.

Here, identification information of a shelf transported by the shelf AGV 43, a case taken out from the shelf by the ACR 41, and an article picked by the PR 42 in the warehouse will be described.

The shelf includes a plurality of storage sections and stores a plurality of cases or articles. For example, a plurality of articles of the same type are stored in one case. A print medium with a bar code or a two-dimensional code indicating shelf identification information (shelf ID) or a wireless medium storing the shelf ID is attached to a top surface, a side surface, and a bottom surface of the shelf. Each storage section of the shelf is provided with a print medium with a bar code or a two-dimensional code indicating a shelf ID and storage section identification information (storage section ID), or a wireless medium storing a movable shelf ID and a storage section ID.

A print medium with a bar code or a two-dimensional code indicating case identification information (case ID) or a wireless medium storing the case ID is attached to a top surface, a side surface, and a bottom surface of the case stored in the shelf.

A print medium with a bar code or a two-dimensional code indicating article identification information (article ID) or a wireless medium storing the article ID is attached to a top surface, a side surface, and a bottom surface of the article stored in the shelf or the case.

The ACR 41 includes a camera, and based on the shelf IDs and the case IDs read by the camera, specifies the case and the shelf designated by the ACR-PR_WCS 31, takes out the specified case, and conveys the taken-out case to a target area.

The PR 42 includes a camera, specifies the article designated by the ACR-PR_WCS 31 based on the article IDs read by the camera, picks the specified article, and releases the picked article to a target area. Note that the PR 42 may recognize the shape of the article with the camera and specify the article designated by the ACR-PR_WCS 31.

The shelf AGV 43 includes a camera, and specifies the shelf designated by the shelf AGV_WCS 32 based on the shelf IDs read by the camera, and the specified shelf is conveyed to the target area. For example, the shelf AGV 43 includes a shelf lift mechanism and a traveling mechanism. The shelf AGV 43 is lowered under the designated shelf, and when the shelf lift mechanism pushes up the bottom surface of the shelf, the shelf is lifted and leg portions of the shelf are separated from the floor surface. In this state, the shelf AGV 43 travels to convey the lifted shelf to the target area.

The towing AGV 46 includes a camera, a towing mechanism, and a traveling mechanism, and specifies a shelf designated by the towing AGV_WCS 34 based on the shelf IDs read by the camera, tows the specified shelf, and transports the shelf to a target area.

The memory 23 stores map data covering the entire warehouse. The map data includes a shelf ID, a storage unit ID, a case ID, and an article ID associated with position data. The map data includes information on each station associated with the position data. Each station is a destination of an article or a shelf. That is, the map data indicates the positions of the shelf, the case, the article, and each station. The processing unit 21 controls the taking out of the target shelf, case, or article based on the article order and the map data, and controls the conveyance of the target shelf, case, or article to the target station. The processing unit 21 updates the map data in response to the control of the takeout and conveyance of the target shelf, case, or article. That is, when the target shelf, case, or article is conveyed, the map data is updated to the latest state in accordance with the conveyance. The processing unit 21 controls the taking-out and the conveyance in cooperation with the WCSG 3 (ACR-PR_WCS 31, the shelf AGV_WCS 32, and the towing AGV_WCS 34). Memories 313, 323, and 343 in the WCSG 3 may store the above-described map data.

The sorter 45 includes the sorter 451 to perform total picking and the sorter 452 to perform single picking.

The sorter 451 sorts one or a plurality of articles to a predetermined number of trays of a plurality of trays stored in the cart based on a control signal according to two or more article orders. The cart is movable together with the plurality of trays. That is, the cart is movable together with a predetermined number of trays containing sorted articles. The sorter 451 can sort articles in units of two or more article orders by repeating sorting of articles based on a control signal according to two or more article orders.

The sorter 452 sorts one or a plurality of articles to one tray of a plurality of trays of the fixed shelf based on a control signal according to one article order. The individual trays are movable. The sorter 452 can sort articles in units of one article order by repeating sorting of articles based on a control signal according to one article order.

### [Layout]

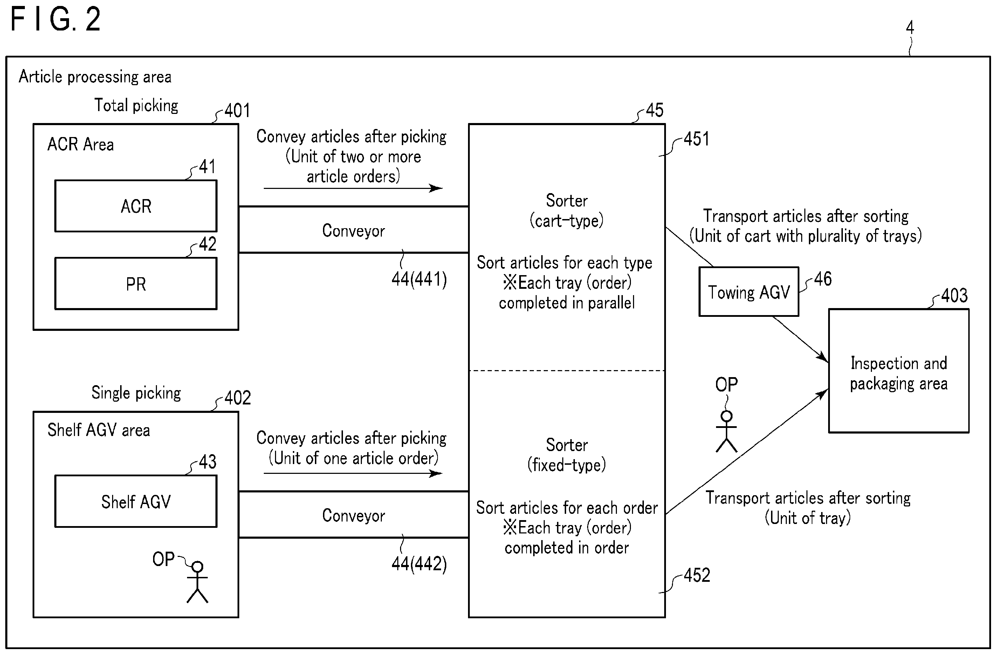

FIG. 2 is a diagram illustrating an example of a layout of an article processing area according to the embodiment. The article processing area is an area of a warehouse.

As shown in FIG. 2, the article processing area 4 includes an ACR area 401 to perform total picking and a shelf AGV area 402 to perform single picking. The article processing area 4 includes the sorter 45. The sorter 45 may include a cart-type sorter 451 to perform total picking and a fixed-type sorter 452 to perform single picking.

For example, a plurality of the ACR 41 and the PR 42 are arranged in the ACR area 401. The ACR 41 takes out the designated article from the designated shelf in units of cases based on the control signal according to the article order, and conveys the article to a picking area of the PR 42. The PR 42 picks a designated article from the case conveyed by the ACR 41 based on the control signal according to the article order, and releases the picked article to a conveyor 441.

The conveyor 441 arranged at the subsequent stage of the ACR area conveys the article released by the PR 42 to the sorter 45. For example, the sorter 45 includes the cart-type sorter 451 to perform total picking, and the conveyor 441 conveys the article released by the PR 42 to the sorter 451.

The sorter 451 sorts one or a plurality of articles to a predetermined number of trays of a plurality of trays stored in the cart based on a control signal according to two or more article orders.

A towing AGV 46 that transports the cart is arranged at the subsequent stage of the sorter 451. The towing AGV 46 transports the cart to an inspection and packaging area 403.

On the other hand, a plurality of shelf AGVs 43 are arranged in the shelf AGV area 402. The shelf AGV 43 transports a shelf storing a designated article to the work area of an operator OP based on a control signal according to the article order. The operator OP picks the designated article from the shelf transported by the shelf AGV 43 while checking the operation instruction displayed on the work instruction display device 47, and releases the picked article to the conveyor 442.

The conveyor 442 arranged at the subsequent stage of the shelf AGV area 402 conveys the article released by the operator OP to the sorter 45. For example, the sorter 45 includes a fixed-type sorter 452 to perform single picking, and the conveyor 442 conveys the article released by the operator OP to the sorter 452.

The sorter 452 sorts one or a plurality of articles to one tray of a plurality of trays of the fixed shelf based on a control signal according to one article order. The sorter 452 turns on an indicator corresponding to the tray on which the sorting of the articles is completed, so as to give a notification of the sorting completion.

The operator OP in charge of the sorter 452 checks the lighting of the indicator and conveys the article tray for which the sorting is completed to the inspection and packaging area 403.

The ACR 41 and the PR 42 of the ACR area 401, the conveyor 441, the sorter 451, and the towing AGV 46 constitute a total picking processing unit corresponding to the total picking method. On the other hand, the shelf AGV 43 of the shelf AGV area 402, the conveyor 442, and the sorter 452 constitute a single picking processing unit corresponding to the single picking method.

### [Operation]

### <Distribution of Article Order>

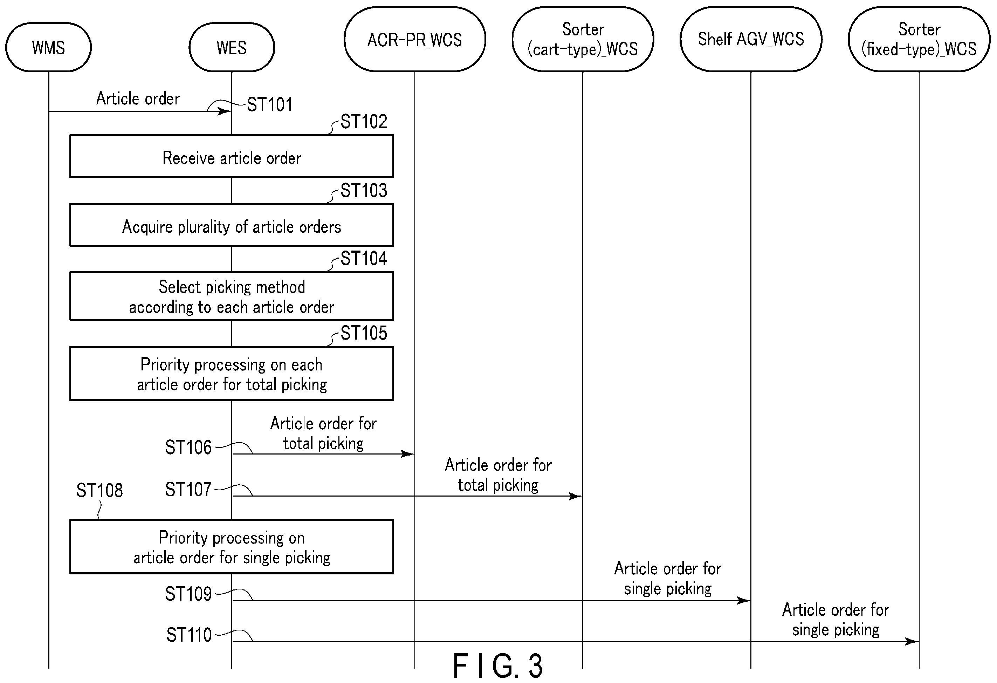

FIG. 3 is a sequence diagram illustrating an example of a selection process of a picking method according to the embodiment.

The WMS 1 transmits an article order to the WES 2 (ST101) .

The interface I/F 22 for WMS in the WES 2 receives the article order from the WMS 1 (ST102). The memory 23 stores the received article order. When the reception of the article order is repeated, a plurality of article orders are stored in the memory 23.

The acquisition unit 211 in the WES 2 acquires a plurality of article orders from the memory 23 (ST103).

The selection unit 212 selects a picking method for each article order from a plurality of different picking methods based on the plurality of article orders acquired (ST104). That is, the selection unit 212 selects the single picking method or the total picking method based on the plurality of article orders, and, based on the selection result, distributes the article orders into article orders for the control unit of the article processing device configured to perform the single picking method and article orders for the article processing device configured to perform the total picking method.

For example, the selection unit 212 selects the single picking method or the total picking method based on the article information included in the plurality of article orders. The article information includes article identification information, and the selection unit 212 selects the single picking method or the total picking method based on the article identification information. The article identification information includes information indicating a type of the articles. The selection unit 212 can recognize the same articles or the same type of articles from the article information included in the plurality of article orders.

In the case where the article designated by a first article order of the plurality of article orders is not designated by another article order, the selection unit 212 selects the single picking method corresponding to the first article order. In addition, in the case where any article designated by a second article order of the plurality of article orders is designated by another third article order, the selection unit 212 selects the total picking method corresponding to the second and third article orders.

The priority processing unit 213 performs priority processing on each article order for the total picking method, determines the priority of each article order for the total picking method (ST105), and assigns the determined priority to each article order for the total picking method.

To implement the total picking method, the output unit 214 outputs each article order to which the priority is assigned to ACR-PR_WCS 31 via the I/F 24 for ACR-PR_WCS (ST106), and outputs each article order to which the priority is assigned to the sorter_WCS 33 to control the sorter 452 via the I/F 26 for sorter_WCS (ST107).

The priority processing unit 213 performs priority processing on each article order for the single picking method, determines priority (ST108) for each article order for the single picking method, and assigns the determined priority to each article order for the single picking method.

To implement the single picking method, the output unit 214 outputs each article order to which the priority is assigned to the shelf AGV_WCS 32 via the I/F 25 for the shelf AGV_WCS (ST109), and outputs each article order to which the priority is assigned to the sorter_WCS 33 to control the sorter 451 via the I/F 26 for sorter_WCS (ST110).

### <Total Picking>

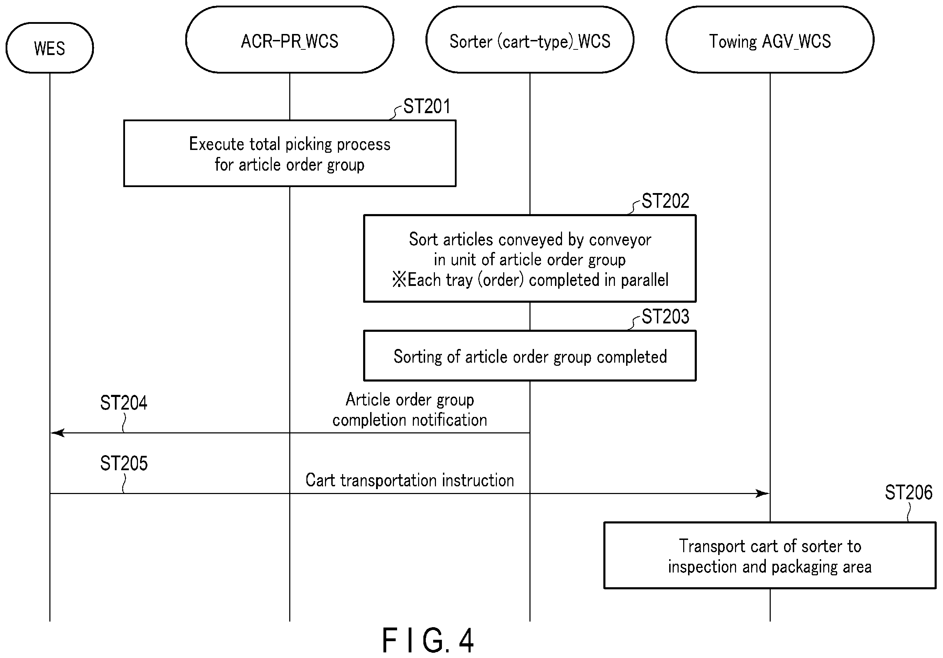

FIG. 4 is a sequence diagram illustrating an example of a total picking process according to the embodiment.

The ACR-PR_WCS 31 controls the ACR 41 and the PR 42 based on a control signal corresponding to the article order as a selection basis of the total picking method, and executes the total picking process (ST201).

The ACR 41 takes out the designated case from the shelf based on each article order (unit of an article order group) of the highest rank priority, and transports the case to a picking area of the PR 42. The PR 42 picks a designated predetermined number of articles of the same type from the case based on each article order of the highest rank priority, and releases the articles to the conveyor 441. In the case where the picking of the articles based on each article order of the highest rank priority is completed, the picking process based on each article order of the highest rank priority is completed. In the case where the picking of the articles is not completed, the taking-out and conveyance of the case by the ACR 41 and the picking and release of the articles from the case by the PR 42 are repeated.

Similarly, the ACR 41 takes out the designated case from the shelf based on each article order (unit of an article order group) of the second highest rank priority, and transports the case to the picking area of the PR 42. The PR 42 picks a designated predetermined number of articles of the same type from the case based on each article order of the second highest rank priority, and releases the articles to the conveyor 441.

The sorter_WCS 33 controls the sorter 451 based on a control signal according to the article orders (unit of an article order group) having the highest rank priority, and sorts a predetermined number of articles of the same type conveyed by the conveyor 441 into each tray (ST202). At this point, in the case where the sorting based on the article orders having the highest rank priority is completed, that is, in the case where the sorting of the article order group is completed (ST203), the sorter_WCS 33 outputs an article order group completion notification to the WES 2 (ST204). If the sorting is not completed, subsequently, the sorter_WCS 33 controls the sorter 451 to sort a predetermined number of articles of the same type conveyed by the conveyor 441 into each tray.

Likewise, the sorter_WCS 33 controls the sorter 451 based on the control signal according to each article order (unit of an article order group) of the second highest priority, and sorts the predetermined number of articles of the same type conveyed by the conveyor 441 into each tray.

The output unit 214 of the WES 2 outputs a cart transportation instruction to the towing AGV_WCS 34 based on the article order group completion notification output from the sorter_WCS 33 (ST205).

The towing AGV_WCS 34 controls the towing AGV 46 based on the cart transportation instruction, and causes the towing AGV 46 to transport the cart of the sorter 451 to the inspecting and packaging area 403 (ST206). The towing AGV 46 transports the cart of the sorter 451 to the inspection and packaging area 403 based on the control of the towing AGV_WCS 34.

### <Single Picking>

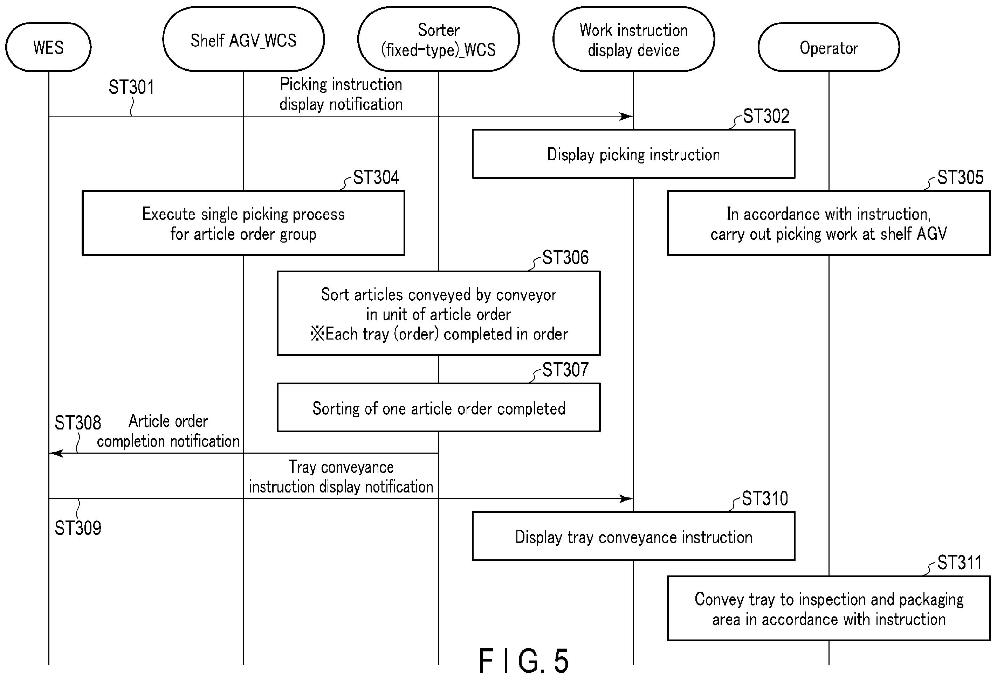

FIG. 5 is a sequence diagram illustrating an example of a single picking process according to the embodiment.

The output unit 214 of the WES outputs an article order as a selection basis of the single picking method.

The work instruction display unit 28 outputs a picking instruction display notification to the work instruction display device 47 based on the article order as a selection basis of the single picking method. The work instruction display device 47 displays a picking instruction corresponding to the article order as a selection basis of the single picking method.

The shelf AGV_WCS 32 controls the shelf AGV 43 based on the control signal corresponding to the article order (article order group) as a selection basis of the single picking method, and executes the single picking process (ST304) . For example, the shelf AGV_WCS 32 controls the shelf AGV 43 based on the priority of the article order, and executes the single picking process.

The shelf AGV 43 transports the shelf storing the designated article to the work area of the operator OP based on the control signal.

In accordance with the picking instruction displayed by the work instruction display device 47, the operator OP picks the article from the shelf conveyed by the shelf AGV 43 (ST305) and releases the article to the conveyor 442. The picking work by the operator OP may be replaced with the PR 42. That is, the PR 42 may pick the article from the shelf conveyed by the shelf AGV 43 and release the article to the conveyor 442 based on the control signal corresponding to the article order as a selection basis of the single picking method.

The sorter_WCS 33 controls the sorter 452 based on the control signal according to the article order (unit of an article order) as a selection basis of the single picking method, and sorts a predetermined number of articles conveyed by the conveyor 442 to the tray (ST306). That is, the articles are sorted into the trays in a unit of an article order.

When the sorting of one article order is completed (ST307), the sorter_WCS 33 outputs an article order completion notification to the WES 2 (ST308). If the sorting of one article order is not completed, the sorter_WCS 33 subsequently controls the sorter 452 to sort a predetermined number of articles conveyed by the conveyor 442 into the trays. That is, the sorting is continued until the sorting of the articles to the trays is completed in a unit of an article order.

The output unit 214 of the WES 2 notifies the work instruction display device 47 of a tray conveyance instruction display based on the article order completion notification output from the sorter_WCS 33 (ST309).

The work instruction display device 47 displays a tray conveyance instruction (ST310). The operator OP conveys the tray for which sorting is completed to the inspection and packaging area 403 in accordance with the tray conveyance instruction displayed by the work instruction display device 47 (ST311).

According to the present embodiment, it is possible to provide an article order processing method, an article order processing program, an article order processing system, and an article sorting system that achieve efficiency of article processing by selecting different picking methods.

By arranging a WES 2 having I/Fs corresponding to a plurality of types of WCS between the WMS 1 and the WCSG 3, the present embodiment can be realized without modifying the WMS 1.

The WES 2 selects the single picking method or the total picking method suited for each article order based on the plurality of article orders, outputs a first predetermined number of article orders as a selection basis of the single picking method to a control unit of the article processing device corresponding to the single picking method, and outputs a second predetermined number of article orders as a selection basis of the total picking method to a control unit of the article processing device corresponding to the total picking method. The article processing device corresponding to the single picking method processes the articles based on the first predetermined number of article orders as a selection basis of the single picking method, and the article processing device corresponding to the total picking method processes the articles based on the second predetermined number of article orders as a selection basis of the total picking method. This makes it possible to improve the efficiency of the picking process.

In addition, the WES 2 determines the priority of each article order based on the plurality of article orders and performs processing according to the priority, and thus it is possible to improve the completion speed of the article orders in the total picking process and to optimize the work such as the completion of the article orders according to the shipment in the single picking process.

The warehouse system according to the embodiment is a system in which WCS (cart-type/fixed-type sorter, towing AGV) and workers suitable for respective characteristics are arranged and linked at the subsequent stage of the WCS (ACR and shelf AGV) having different picking methods, and can improve efficiency of conveyance to a subsequent process such as inspection and packing.

The program according to the present embodiment may be transferred in a state of being stored in an electronic device such as a WES 2, or may be transferred in a state of not being stored in an electronic device. In the latter case, the program may be transferred via a network or may be transferred in a state of being stored in a storage medium. The storage medium is a non-transitory tangible medium. The storage medium is a computer-readable medium. The storage medium may be any medium that can store a program and is readable by a computer, such as an optical disk or a memory card, and the form thereof is not limited. The electronic device downloads a program transferred (provided) via a network and installs the program in a memory, or reads a program from a storage medium and installs the program in the memory.

While certain embodiments have been described, these embodiments have been presented by way of example only, and are not intended to limit the scope of the disclosures. The novel embodiments described herein can be embodied in a variety of other forms; furthermore, various omissions, substitutions, and modifications of the embodiments described herein may be made without departing from the spirit of the disclosures. The embodiments and their modifications fall within the scope and gist of the disclosures and are covered by the accompanying claims and their equivalents.

## Claims

1. An article order processing method comprising:
acquiring an article order designating one or more articles;
selecting a picking method for each article order from a plurality of different picking methods based on a plurality of article orders acquired; and
outputting a predetermined article order to an article processing device configured to implement a picking method selected for the predetermined article order.

2. The article order processing method according to claim 1, wherein
based on the plurality of article orders, a single picking method of picking an article in a unit of one article order or a total picking method of picking an article in a unit of two or more article orders is selected.

3. The article order processing method according to claim 2, wherein
the single picking method or the total picking method is selected based on article identification information included in the plurality of article orders.

4. The article order processing method according to claim 3, wherein
the total picking method is a method of picking articles for each type of article.

5. The article order processing method according to claim 3, wherein
in a case where an article designated by a first article order of the plurality of article orders is not designated by another article order of the plurality of article orders, the single picking method is selected for the first article order; and
in a case where any article designated by a second article order of the plurality of article orders is designated by a third article order of the plurality of article orders, the total picking method is selected for the second and the third article orders.

6. The article order processing method according to claim 5, wherein
the first article order is output to a first article processing device configured to implement the single picking method; and
the second and the third article orders are output to a second article processing device configured to implement the total picking method.

7. The article order processing method according to claim 2, wherein
for two or more article orders output to an article processing device configured to perform the total picking method, a priority of each article order is determined according to a number of article orders established by picking a predetermined article or a predetermined type of article, and the article order including the priority is output to the article processing device configured to perform the total picking method.

8. The article order processing method according to claim 2, wherein
a priority of each article order is determined based on a shipping date and time of the plurality of article orders, and the article order including the priority is output to an article processing device configured to execute the single picking method.

9. An article order processing program which causes a computer to execute:
acquiring an article order designating one or more articles;
selecting a picking method for each article order from a plurality of different picking methods based on a plurality of article orders acquired; and
outputting a predetermined article order to an article processing device configured to implement a picking method selected for the predetermined article order.

10. An article order processing system comprising:
a first interface configured to input an article order designating one or more articles;
a processor configured to select a picking method for each article order from a plurality of different picking methods based on a plurality of article orders input; and
a second interface configured to output a predetermined article order to an article processing device configured to implement a picking method selected for the predetermined article order.

11. An article sorting system comprising an article order processing system, an article control system, and an article processing system, wherein
the article order processing system comprises
a first interface configured to input an article order designating one or more articles,
an order processor configured to select a single picking method or a total picking method based on a plurality of article orders input, and
a second interface configured to output a first predetermined number of article orders as a selection basis of the single picking method to a first article processing device configured to implement the single picking method, and output a second predetermined number of article orders as a selection basis of the total picking method to a second article processing device configured to implement the total picking method,
the article control system comprises
a first device control processor configured to control the first article processing device based on the first predetermined number of article orders, and
a second device control processor configured to control the second article processing device based on the second predetermined number of article orders, and
the article processing system comprises
the first article processing device controlled by the first device control processor and configured to implement the single picking method, and
the second article processing device controlled by the second device control processor and configured to perform the total picking method.

12. A non-transitory computer-readable storage medium storing a program executable by a processor, wherein
the program causes the processor to execute:
acquiring an article order designating one or more articles;
selecting a picking method for each article order from a plurality of different picking methods based on a plurality of article orders acquired; and
outputting a predetermined article order to an article processing device configured to implement a picking method selected for the predetermined article order.
